# FASCICULE DE BREVET EUROPEEN

(11) **EP 3 221 846 B1**
(45) Date de publication et mention de la délivrance du brevet: **16.02.2022**
(21) Numéro de dépôt: 15805595.4
(22) Date de dépôt: 18.11.2015
(51) Int. Cl.: H04N 19/82, H04N 19/85, H04N 19/186

(54) **PROCÉDÉS DE COMPRESSION ET DE DÉCOMPRESSION DE DONNÉES REPRÉSENTATIVES D'UN OBJET TRIDIMENSIONNEL NUMÉRIQUE ET SUPPORT D'ENREGISTREMENT D'INFORMATIONS CONTENANT CES DONNÉES**
VERFAHREN ZUR KOMPRIMIERUNG UND DEKOMPRIMIERUNG VON DATEN ZUR DARSTELLUNG EINES DIGITALEN DREIDIMENSIONALEN OBJEKTS UND INFORMATIONSAUFZEICHNUNGSMEDIUM ZUR INFORMATIONSAUFZEICHNUNG MIT DIESEN DATEN
METHODS FOR COMPRESSING AND DECOMPRESSING DATA REPRESENTING A DIGITAL THREE-DIMENSIONAL OBJECT AND INFORMATION-RECORDING MEDIUM FOR RECORDING INFORMATION CONTAINING SAID DATA

(30) Priorité: 21.11.2014 FR 1461318
(43) Date de publication de la demande: 27.09.2017
(73) Titulaire: Institut National des Sciences Appliquées de Lyon, 69621 Villeurbanne Cedex (FR); Université Lyon 1 Claude Bernard, 69100 Villeurbanne (FR); Centre National de la Recherche Scientifique, 75016 Paris (FR); Université Lyon 2 A. et. L Lumière, 69007 Lyon (FR); Ecole Centrale de Lyon, 69134 Ecully (FR)
(72) Inventeur: DUPONT, Florent, 69270 Fontaines Sur Saone (FR); LAVOUE, Guillaume, 69100 Villeurbanne (FR); CHEVALIER, Laurent, 69001 Lyon (FR)
(74) Mandataire: Colombo, Michel
(86) Numéro de dépôt international: PCT/FR2015/053122
(87) Numéro de publication internationale: WO 2016/079430

(56) Documents cités:
- US-A1- 2004 164 982
- HOPPE H: "Progressive Meshes", COMPUTER GRAPHICS PROCEEDINGS. SIGGRAPH '96, ACM, NEW YORK, US, 1 janvier 1996 (1996-01-01), XP008107612, ISBN: 978-0-89791-746-9
- HOPPE ET AL: "Efficient implementation of progressive meshes", COMPUTERS AND GRAPHICS, ELSEVIER, GB, vol. 22, no. 1, 25 février 1998 (1998-02-25), pages 27-36, XP026758601, ISSN: 0097-8493, DOI: 10.1016/S0097-8493(97)00081-2 [extrait le 1998-02-25]
- LILI WANG ET AL: "Simplification for texture mapping models with mesh segmentation", VIRTUAL SYSTEMS AND MULTIMEDIA (VSMM), 2010 16TH INTERNATIONAL CONFERENCE ON, IEEE, PISCATAWAY, NJ, USA, 20 octobre 2010 (2010-10-20), pages 197-203, XP031833932, ISBN: 978-1-4244-9027-1
- CUI XIE XIUWEN LIU: "Feature-Preserving Simplification of Texture-Mapped Models", INTERNATIONAL CONFERENCE ON COMPUTER GRAPHICS, IMAGING AND VISUALISATION (CGIV'06), 1 janvier 2006 (2006-01-01), pages 390-395, XP055204737, DOI: 10.1109/CGIV.2006.44 ISBN: 978-0-76-952606-5

## Description

L'invention concerne un procédé de compression de données représentatives d'un objet tridimensionnel. L'invention concerne en outre un ensemble de données représentatives d'un objet tridimensionnel compressées obtenu au moyen de ce procédé de compression, ainsi qu'un support d'enregistrement d'informations contenant cet ensemble de données. L'invention concerne également un procédé de décompression de telles données qui ont été compressées à l'aide de ce procédé. L'invention concerne enfin un support d'enregistrement d'information et un calculateur pour mettre en œuvre ces procédés.

Typiquement, dans le domaine de la vision par ordinateur et de l'infographie tridimensionnelle (« computer graphics » ou « computer vision » en langue anglaise), un objet tridimensionnel est représenté numériquement sous la forme d'un maillage (« polygonal mesh » en langue anglaise). Ce maillage est formé d'une pluralité de polygones planaires contigus les uns par rapport aux autres. Chaque polygone comporte une pluralité de sommets reliés entre eux par des arêtes qui délimitent une face du polygone.

Des procédés de compression dits « progressifs » (« progressive compression » en langue anglaise) sont connus. Ces procédés facilitent notamment la transmission d'un objet tridimensionnel depuis un serveur de contenu multimédia vers un terminal d'un client sur lequel l'objet doit être affiché. Dans ces procédés, le maillage est graduellement simplifié par des opérations de suppression sélective (opérations aussi nommées « décimation ») des sommets, pour en réduire la taille. Le maillage simplifié est transmis vers le terminal, où il est affiché. Puis il est graduellement reconstruit sur ce terminal à partir de données incrémentielles transmises par la suite, jusqu'à retrouver l'objet tridimensionnel tel qu'il était initialement avant la compression.

Un exemple de ce procédé est décrit dans le document : « Rate-distortion optimization for progressive compression of 3D mesh with color attributes », Ho Lee et al, The Visual Computer, vol. 28, p. 137-153, Springer-Verlag, mai 2011, DOI : 10.1007/s00371-011-0602-y.

Lors de l'affichage progressif de l'objet tridimensionnel en cours de décompression, ces procédés ont pour inconvénient de générer des artefacts graphiques lorsqu'ils sont utilisés avec des objets tridimensionnels texturés. Par objet texturé, on entend un objet tridimensionnel dans lequel les polygones du maillage ont leur surface recouverte par une image numérique, dite « texture » ( « texture mapping » en langue anglaise).

De l'état de la technique est également connnu de :
- HOPPE H : « Progressive Meshes », Computer Graphics Proceedings, Siggraph'96, ACM, New York, US, 1/1/1996,
- HOPPE et Al : « Efficient implementation of progressive meshes », Computers and graphies, Elsevier, GB, vol. 22, n°1, 25/02/1998, pages 27-39,
- Lili Wang et Al: « Simplification for texture mapping models with mesh segmentation », Virtual Systems and Multimedia (VSMM), 2010 16th International Conférence on, IEEE, Piscataway, NJ, USA, 20/10/2010, pages 197-203,
- CUI XIE XIUWEN LIU : « Feature-Preserving Simplification of Texture-Mapped Models », International Conférence on Computer Graphics, Imaging and visualisation (CGIV'06), 1/1/2006, pages 390-395,
- US2004/164982A1.

Il existe donc un besoin pour un procédé de compression progressive d'un objet tridimensionnel qui limite l'apparition de tels artefacts graphiques sur l'objet lorsque celui-ci comporte des textures.

L'invention concerne donc un procédé de compression de données représentatives d'un objet tridimensionnel numérique conforme à la revendication 1.

Les inventeurs ont identifié qu'un problème se pose lorsque l'objet tridimensionnel comporte des polygones adjacents l'un à l'autre et dont les textures sont différentes. Le problème se pose particulièrement au niveau de frontières entre des portions de l'objet qui possèdent des textures très différentes l'une de l'autre. Typiquement, les procédés connus de compression progressive sélectionnent les sommets à supprimer en fonction de propriétés géométriques du maillage, sans tenir compte des informations de texture des polygones. Ainsi, l'arête commune qui sépare ces polygones adjacents peut être supprimée du fait de la simplification. L'information concernant le fait que, avant simplification du maillage, il existait des textures différentes de chaque côté de l'arête supprimée est ainsi absente dans le maillage simplifié obtenu. Dès lors, lors de la décompression, quand ce maillage simplifié est affiché, un artefact graphique apparaît. Cela dégrade la qualité visuelle de l'objet tridimensionnel perçu lors de sa décompression.

Dans le procédé ci-dessus, la recherche des premier et second polygones permet d'identifier les polygones où un artefact serait susceptible d'apparaître si la simplification était directement mise en œuvre. Le remplacement, dans le second polygone, des premier et second sommets en commun par les troisième et quatrième sommets distincts et la création des arêtes permettent de séparer les premier et second polygones. Ils ne sont alors plus adjacents l'un à l'autre. Ainsi, par exemple, la suppression du premier ou du second sommet n'a pas pour conséquence la disparition à la fois des premier et second polygones. Lors de la compression, l'information sur la différence de texture est donc préservée au moins tant que les premier, second, les troisième et quatrième sommets n'ont pas été supprimés du maillage simplifié. Cette information est donc conservée plus longtemps pendant le processus de compression. Dès lors, à l'inverse, lors de la décompression, cette information réapparaît beaucoup plus tôt dans le maillage simplifié affiché sur l'écran. On minimise ainsi le temps pendant lequel un tel artefact est visible ce qui améliore la qualité visuelle de l'objet affiché en cours de décompression.

Enfin, comme les troisième et quatrième sommets occupent la même position que les premier et second sommets et que la longueur des arêtes est nulle, l'aspect extérieur de l'objet n'est pas modifié par cette création de sommets supplémentaires.

Selon un autre aspect, l'invention concerne également un ensemble de données représentatives d'un objet tridimensionnel numérique compressé conforme à la revendication 3.

Selon un autre aspect, l'invention concerne également un support d'enregistrement d'informations, comportant l'ensemble de données représentatives d'un objet tridimensionnel numérique compressé conforme à l'invention.

Selon un autre aspect, l'invention concerne également un procédé de décompression de données représentatives d'un objet tridimensionnel numérique compressé conforme à la revendication 5.

Selon un autre aspect, l'invention concerne également un procédé de transmission de données représentatives d'un objet tridimensionnel numérique entre un émetteur et un récepteur, ce procédé comportant :
- la compression des données acquises, au moyen d'un procédé de compression conforme à l'invention ;
- la décompression, par le récepteur, des données compressées transférées, au moyen d'un procédé de décompression conforme à l'invention.

Les modes de réalisation de l'invention peuvent présenter une ou plusieurs des caractéristiques des revendications dépendantes.

Selon un autre aspect, l'invention concerne également un support d'enregistrement d'informations, comportant des instructions pour l'exécution d'un procédé conforme à l'invention lorsque ces instructions sont exécutées par un calculateur électronique.

Selon un autre aspect, l'invention concerne enfin un calculateur électronique pour la mise en œuvre de l'invention.

L'invention sera mieux comprise à la lecture de la description qui va suivre, donnée uniquement à titre d'exemple non limitatif et faite en se référant aux dessins sur lesquels :
- la figure 1 est une illustration schématique d'un objet numérique tridimensionnel ;
- la figure 2 est une illustration schématique d'un ensemble de données représentatives d'une portion de l'objet de la figure 1 ;
- la figure 3 est une illustration d'un dispositif pour transmettre les données de la figure 2 ;
- la figure 4 est un ordinogramme d'un procédé de compression des données de la figure 2 ;
- la figure 5 est une illustration schématique de la portion de l'objet de la figure 2 telle que modifiée à l'issue d'une étape du procédé de la figure 4 ;
- les figures 6A à 6C sont des illustrations schématiques de portions du maillage de l'objet de la figure 1 telles que modifiées lors de l'exécution d'une étape du procédé de la figure 4 ;
- les figures 7A et 7B sont des illustrations schématiques de l'objet de la figure 1 après application du procédé de compression de la figure 4 ;
- les figures 8A et 8B sont des illustrations schématiques de l'objet de la figure 1 après application du procédé de compression de la figure 4 lorsqu'une étape de duplication de sommets est omise de ce procédé ;
- la figure 9 est une illustration schématique d'un support d'enregistrement d'informations qui comporte un ensemble de données représentatives de l'objet numérique tridimensionnel compressé à l'issue du procédé de la figure 4 ;
- la figure 10 est un ordinogramme d'un procédé de décompression des objets des figures 7A à 8B pour reconstruire l'objet de la figure 1 ;
- la figure 11 est une illustration schématique d'un autre mode de réalisation d'une étape du procédé de la figure 4.

Dans ces figures, les mêmes références sont utilisées pour désigner les mêmes éléments.

Dans la suite de cette description, les caractéristiques et fonctions bien connues de l'homme du métier ne sont pas décrites en détails.

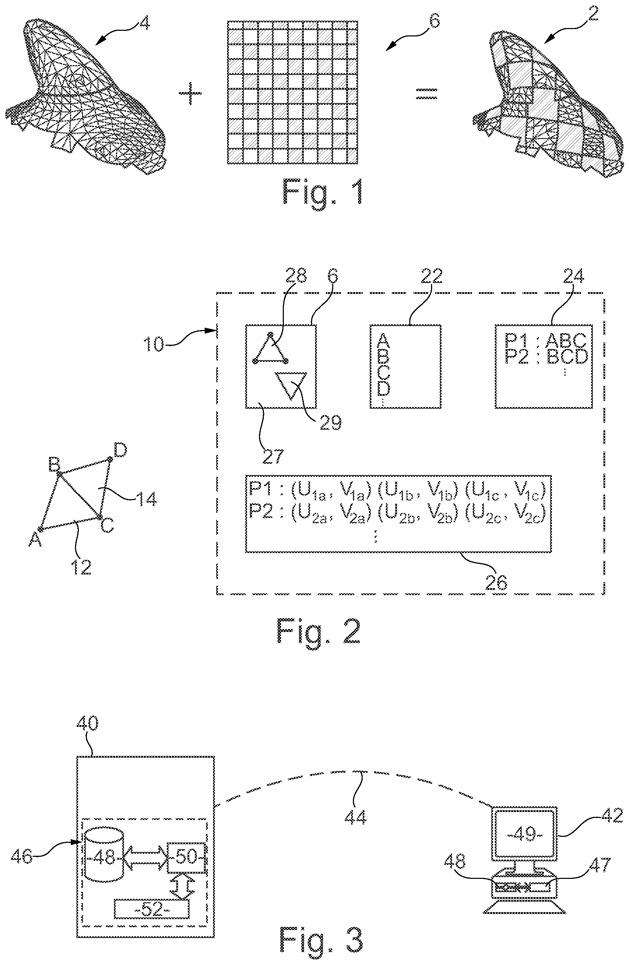

La figure 1 représente un objet 2 numérique tridimensionnel sur lequel est appliquée une texture en forme de damier. Cet objet 2 comporte un maillage 4 et un atlas 6 de textures.

Le maillage 4 (« polygonal mesh » en langue anglaise) est formé d'une pluralité de polygones planaires contigus les uns aux autres. Chaque polygone comporte :
- des sommets (« vertex » en langue anglaise),
- des arêtes qui relient les sommets du polygone deux à deux,
- une face, délimitée par les arêtes.

Le maillage 4 ne comporte ici aucun trou.

L'atlas 6 comporte une pluralité de textures individuelles, qui recouvre chacune une face d'un polygone du maillage 4. Chaque texture est une image bidimensionnelle, par exemple une image matricielle. Cette technique est connue sous le nom de « texture mapping » en langue anglaise.

Les polygones sont ici de forme triangulaire. En effet, la plupart des processeurs graphiques (« graphical processing unit » en langue anglaise) sont optimisés pour le traitement de polygones triangulaires. Aussi, dans ce qui suit, on pourra utiliser le terme de triangle pour désigner ces polygones.

Dans cet exemple, l'objet 2 représente schématiquement une grenouille. L'atlas 6 présente un motif en damiers de couleur noire et blanche, qui recouvre la totalité de la surface extérieure du maillage 4.

La figure 2 représente un ensemble 10 de données numériques utilisées pour représenter l'objet 2. Pour simplifier, ces données sont décrites pour uniquement deux triangles 12 et 14 du maillage 4. Ces deux triangles 12, 14 sont aussi représentés en version agrandie dans la figure 2. Dans ce qui suit, le terme d'objet 2 est utilisé pour désigner des données 10 représentatives de l'objet 2. On parlera d'acquisition de l'objet 2 pour désigner l'acquisition des données 10.

L'ensemble 10 comporte :
- l'atlas 6 de textures ;
- une liste 22 des sommets des polygones du maillage 4;
- une liste 24 des polygones du maillage 4;
- une liste 26 de coordonnées de texture des polygones du maillage 4.

L'atlas 6 contient toutes les textures nécessaires pour remplir chaque face de chaque polygone du maillage 4. Chaque texture d'une face d'un polygone est indexée au sein de l'atlas 6 par un jeu de trois coordonnées (Uₐ,Vₐ), (U_{b}, V_{b}) et (U_{c}, V_{c}) (« UV mapping » en langue anglaise). Par exemple, l'atlas 6 contient une image matricielle 27 à deux dimensions. Les coordonnées (Uₐ,Vₐ), (Ub, Vb) et (U_{c}, V_{c}) codent la position de trois points dans un repère orthonormé de cette image 27. Ces trois points délimitent un morceau de l'image 27 également appelé « morceau de texture ». C'est ce morceau de texture qui est utilisé pour remplir la face d'un polygone. Dans ce qui suit, ces coordonnées seront désignées sous le nom de « coordonnées UV ». Plus précisément, ici, chaque morceau de texture présente la même forme que le polygone auquel elle correspond. Ainsi, chaque morceau de texture a une forme triangulaire qui a exactement les mêmes dimensions que la face du polygone à remplir avec ce morceau de texture. Cependant, les sommets des morceaux de texture ne sont pas des sommets du maillage 4. Pour éviter toute confusion, on parlera de « point » pour désigner les sommets des morceaux de texture. Les morceaux de texture correspondant aux polygones 12 et 14 portent respectivement les références 28 et 29 dans l'image 27. On note leurs coordonnées de texture respectives (U₁ₐ,V₁ₐ), (U_{1b}, V_{1b}) et (U_{1c}, V_{1c}) pour le morceau 28 et (U₂ₐ,V₂ₐ), (U_{2b}, V_{2b}) et (U_{2c}, V_{2c}) pour le morceau 29.

Typiquement, l'atlas 6 est organisé de telle sorte que les textures qui présentent des propriétés graphiques différentes sont placées à des emplacements distincts de l'image 27. Par propriétés graphiques, on désigne par exemple des valeurs représentatives des intensités de pixel.

La liste 22 comporte, pour chaque sommet, les coordonnées de ce sommet exprimées dans un repère de l'espace. Dans l'exemple de la figure 2, on note A, B et C les sommets du polygone 12. Le polygone 14 comporte ici les sommets B, C et D car, dans cet exemple, les polygones 12 et 14 sont adjacents et les sommets B et C sont communs aux polygones 12 et 14.

La liste 24 comporte, pour chaque polygone, une entrée énumérant les sommets de la liste 22 contenus dans ce polygone. Par exemple, l'entrée du polygone 12 dans la liste 24, notée « P1 », comporte les sommets « ABC ».

La liste 26 comporte, pour chaque polygone de la liste 24, un jeu de coordonnées UV qui définit le morceau de texture associé à ce polygone. Par exemple, l'entrée « P1 » associée au polygone 12 comporte les coordonnées, notées (u1, v1), des trois points qui délimitent le morceau de texture 28 dans l'atlas 6. Il en va de même pour l'entrée, notée P2, correspondant au polygone 14. L'entrée P2 est associée, par la liste 26, aux coordonnées (u2, v2) des trois points qui délimitent le morceau de texture 29.

Par exemple, les données 10 sont compatibles avec le standard « OpenGL » (pour « open graphics library » en langue anglaise) bien connu de l'homme du métier.

La figure 3 représente un exemple de dispositif pour transmettre l'objet 2 depuis un émetteur 40 vers un récepteur 42. L'émetteur 40 et le récepteur 42 sont aptes à échanger des données entre eux au moyen d'une liaison 44 d'échange de données. Généralement, l'émetteur 40 et le récepteur 42 sont séparés l'un de l'autre par plusieurs mètres ou plusieurs kilomètres. La liaison 44 est typiquement une liaison établie par l'intermédiaire d'un réseau grande distance de transmission d'information comme le réseau internet (« World Wide Web »).

L'émetteur 40 comporte une unité de calcul 46 qui inclut :
- un support 48 d'enregistrement d'informations ;
- un calculateur 50 électronique programmable ;
- une interface 52 d'échange de données.

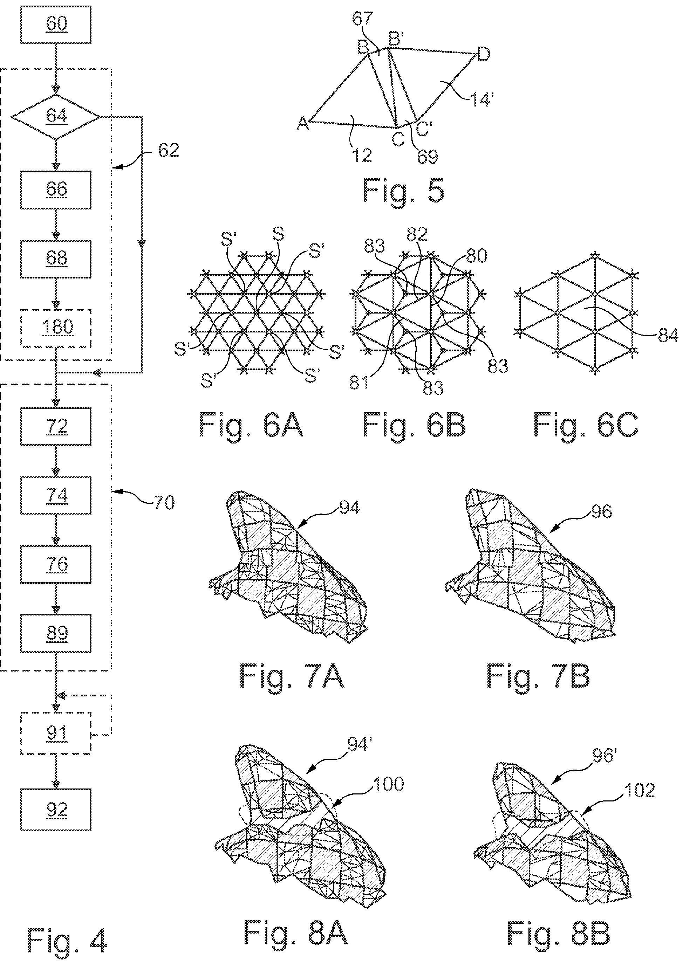

Le support 48 comporte les instructions nécessaires pour exécuter le procédé de compression de la figure 4. Le calculateur 50 lit et exécute les instructions enregistrées sur le support 48. L'interface 52 permet l'échange et le transfert des données 10 sur la liaison 44.

L'émetteur 40 est par exemple un serveur de distribution d'un contenu multimédia. Le récepteur 42 est ici un terminal client tel qu'un ordinateur ou un dispositif de communication mobile. Le récepteur 42 est notamment apte à afficher l'objet 2 (« rendering » en langue anglaise). Il comporte ici pour cela un processeur graphique 48 et une unité de calcul 47, par exemple identique à l'unité 46.

L'émetteur 40 est apte à compresser les données 10 puis à les transmettre vers le récepteur 42 pour que ce dernier les décompresse et affiche l'objet 2 sur un écran 49.

Un exemple de compression des données 10 va d'abord être décrit, en référence à l'ordinogramme de la figure 4 et à l'aide des figures 1 à 7C. Ce procédé est un procédé de compression progressif du maillage (« progressive compression » en langue anglaise).

D'abord, lors d'une étape 60, les données 10 sont acquises par l'unité 46.

Ensuite, lors d'une étape 62, le maillage 4 est mis en forme en vue des étapes subséquentes du procédé de compression. Ces étapes, et notamment de simplification seront décrites plus en détail dans ce qui suit.

Cette étape comporte d'abord une opération 64 de recherche, parmi les polygones du maillage 4, de premier et second polygones adjacents qui présentent des textures différentes.

Deux polygones sont dits être adjacents s'ils présentent entre eux un premier et un second sommets en commun et sont reliés entre eux par une arête commune.

Ici, deux textures sont dites être différentes si l'intersection des morceaux de textures correspondants dans l'atlas 6 est un ensemble nul, c'est-à-dire que les morceaux de texture sont complètement disjoints dans l'atlas 6. Par exemple, les morceaux 28 et 29 de texture sont disjoints car la plus petite distance qui les sépare est non nulle.

Ici, les polygones 12 et 14 sont adjacents et ont en commun les sommets B et C. De plus, leurs morceaux de texture respectifs 28 et 29 sont différents. Aussi, dans ce qui suit, on utilisera les références 12 et 14 pour désigner de façon générique de tels polygones. De même, on utilisera les références B et C pour désigner les sommets en commun aux polygones 12 et 14.

Par exemple, les polygones 12 et 14 sont identifiés en recherchant automatiquement, à l'aide des listes 24 et 26, des polygones qui sont à la fois adjacents entre eux et qui sont associés par la liste 26 à des morceaux de texture disjoints.

Si des polygones 12, 14 ont été identifiés, alors, l'étape 62 comporte, pour chaque paire de polygones identifiés, la séparation de ces polygones suivant ce qui suit.

Lors d'une opération 66, les sommets B et C sont remplacés dans le polygone 14 par des sommets B' et C', dits sommets dédoublés. Les sommets B' et C' occupent respectivement les mêmes positions dans l'espace que les sommets B et C. Ils ont donc les mêmes coordonnées que ces derniers.

Par exemple, les sommets B' et C' sont créés dans la liste 22 et la définition BCD du polynôme 14 dans la liste 24 est remplacée par la définition B'C'D. Ainsi, dans les données 10 une nouvelle arête B'C' est créée et les arêtes BD et CD du polygone 14 sont remplacées par des arêtes, respectivement, B'D et C'D. Par la suite, le polygone 14 ainsi modifié porte la référence 14' (figure 5). Dans cette description, une arête qui relie directement deux sommets X et Y dans un polygone porte la référence « XY ».

Lors d'une opération 68, au moins deux arêtes de longueur nulle sont créées entre, d'une part, les sommets B et B' et, d'autre part, les sommets C et C', de façon à créer au moins un polygone intermédiaire interposé entre les polygones 12 et 14'. Ces arêtes BB' et CC' raccordent entre eux les polygones 12, 14'. Ce raccord est nécessaire pour éviter l'apparition d'artefact supplémentaire à la jonction des polygones 12, 14' comme, par exemple, l'apparition d'un trou. La face de ce polygone intermédiaire a une superficie nulle de sorte qu'il n'est pas visible sur un écran et ne crée aucun artefact visible. Ici, comme les polygones du maillage 4 sont nécessairement des triangles, ce sont deux polygones triangulaires intermédiaires 67, 69 (figure 5), interposés entre les polygones 12 et 14', qui sont créés. Par exemple, une arête supplémentaire B'C est créée pour former ces polygones 67 et 69. Ici, le polygone 67 est délimité par les arêtes BC, CB' et BB' et le polygone 69 est délimité par les arêtes B'C', CC' et CB'. Les nouvelles arêtes BB', CC' et CB' sont créées en ajoutant dans la liste 24 la définition de ces nouveaux polygones 67, 69. Par exemple, les polygones 67 et 69 présentent une texture de valeur nulle et ne sont donc associés à aucun morceau de texture par la liste 26.

Pour faciliter la lecture de la figure 5, les triangles 67 et 69 y sont dessinés avec une face de superficie non nulle alors que, comme expliqué ci-dessus, ils ont une surface nulle. De même, sur cette figure, les arêtes BB', CC' sont représentées avec une longueur non nulle alors que ce n'est pas le cas. Le fait qu'un polygone présente une face de superficie nulle ne signifie pas pour autant qu'il n'existe pas dans le maillage 4, puisque tout polygone y est défini en fonction de ses sommets, notamment dans la liste 24. Il en va de même pour les arêtes.

Ces opérations 66 et 68 se traduisent par une modification correspondante des listes 22, 24 et 26 des données 10 pour refléter les modifications du maillage 4.

La duplication des sommets B et C, en les remplaçant dans le polygone 14 par les sommets B' et C', permet de séparer les polygones 12 et 14 l'un de l'autre. Cela évite que l'information selon laquelle il existe une différence de texture entre ces deux polygones soit perdue dès que l'on supprime l'un des sommets B et C. De plus, le fait que les sommets B' et C' soient reliés aux sommets B et C par des arêtes évite que les polygones 12 et 14' ne se déplacent l'un par rapport à l'autre au cours de la suite du procédé. Un tel déplacement engendrerait des trous dans le maillage 4, ce qui dégraderait la qualité graphique de l'objet 2. La valeur nulle des longueurs des arêtes et de la superficie de la face des polygones 67 et 69 font que cette duplication des sommets B et C ne se traduit pas par une modification de l'aspect graphique extérieur du maillage 4 et donc de l'objet 2. Ces arêtes permettent de modifier localement la connectivité du maillage 4, de sorte que des opérations de simplification ultérieures, qui se basent sur des informations de connectivité, n'aboutissent pas à une disparition trop rapide de ces polygones.

Lorsque plus aucune paire de polygones adjacents et de texture différente n'est trouvée dans les données 10 modifiées, alors l'étape 62 se termine.

A l'issue de l'étape 62, le maillage 4 ne comporte pas de polygones adjacents qui ont des textures différentes.

Ensuite, lors d'une étape 70, le maillage 4 est simplifié. Cette simplification comporte la suppression de sommets, et donc de polygones, du maillage 4. Cette simplification a pour but de créer de nouveaux polygones qui présentent une face plus étendue que les polygones supprimés. Ces nouveaux polygones viennent remplacer les polygones supprimés. On obtient ainsi une image simplifiée qui occupe moins de place en mémoire.

L'étape 70 comporte à cet effet :
- une opération 72 d'identification, en fonction d'un critère prédéterminé, de sommets à supprimer ;
- une opération 74 de suppression des sommets identifiés et des arêtes qui relient ces sommets entre eux et aux autres sommets du maillage 4 ;
- une opération 76 de création :
   - de nouvelles arêtes pour relier les sommets qui n'ont pas été supprimés, créant ainsi les nouveaux polygones et,
   - de nouvelles textures pour recouvrir les faces des nouveaux polygones, à partir des textures respectives des polygones supprimés.

L'identification lors de l'opération 72 est par exemple réalisée en sélectionnant les sommets de la liste 22 sur la base de critères de connectivité, tels que le nombre de leurs plus proches voisins.

L'opération 74 a pour conséquence la suppression d'une partie des polygones du maillage 4.

Dans cet exemple, l'étape 70 est réalisée au moyen de l'algorithme décrit dans les documents suivants :
- « Rate-distortion optimization for progressive compression of 3D mesh with color attributes », Ho Lee et al, The Visual Computer, vol. 28, p. 137-153, Springer-Verlag, mai 2011, DOI : 10.1007/s00371-011-0602-y.
- P. Alliez et al. « Progressive compression for lossless transmission of triangle meshes », ACM Proceedings of SIGGRAPH, p. 195-202, 2001.

Les figures 6A à 6C illustrent le fonctionnement de cet algorithme sur une portion 80 du maillage 4.

Cet algorithme fonctionne en deux temps. D'abord, les opérations 72 à 74 sont réalisées lors d'une phase dite de « conquête ». Les sommets du maillage 4 sont parcourus automatiquement de proche en proche, en se déplaçant le long des arêtes du maillage 4, à la manière d'un graphe. L'ordre dans lequel les sommets sont parcourus est défini par un parcours de graphe (« graph traversai » en langue anglaise) prédéfini. Pour chaque sommet, on détermine quelle est la valence de ce sommet, c'est-à-dire le nombre de voisins immédiats S' de ce sommet auxquels il est directement connecté par des arêtes. Si ce sommet S présente une valence inférieure à un seuil prédéterminé, alors il est supprimé. Les arêtes qui reliaient ce sommet S à ses voisins immédiats sont alors supprimées. Ces arêtes portent les références SS' sur la figure 6A. Les nouvelles arêtes 80, 81, 82 (figure 6B) sont créées pour remplacer les arêtes SS'.

Dans une seconde phase, dite de nettoyage, l'algorithme supprime avantageusement certains sommets 83 excédentaires ainsi que les arêtes reliant ces sommets et crée de nouvelles arêtes en remplacement, de manière à obtenir des nouveaux polygones 84 présentant une forme régulière. L'opération 76 est ici en partie réalisée lors de cette phase, puisque des arêtes y sont créées.

Ces opérations 72, 74 et 76 se traduisent ici par des modifications correspondantes des listes 22, 24 et 26 et de l'atlas 6 pour refléter les modifications apportées au maillage 4.

Avantageusement, lors d'une opération 89, sont enregistrées des données dites incrémentielles ou de raffinement. Ces données indiquent quels ont été les sommets et les arêtes supprimées ainsi que ceux créés lors de l'étape 70. Par exemple, ces données comportent une liste des sommets supprimés lors de l'étape 70, ainsi que d'une liste donnant, pour chacun de ces sommets supprimés, l'ensemble des sommets voisins auxquels ce sommet supprimé était directement connecté par une arête. Les données incrémentielles permettent, lorsqu'elles sont utilisées dans un procédé de décompression, de réaliser les opérations inverses de celles de l'étape 70. Cela permet de reconstruire le maillage tel qu'il était avant application de l'étape 70 à partir du maillage simplifié obtenu à l'issue de cette étape 70 et de ces données incrémentielles. Avantageusement, ces données comportent également des informations permettant de retrouver le morceau de texture associé à chaque polygone reconstruit sans perte d'information.

La figure 7A représente une version simplifiée de l'objet 2, dite aussi objet simplifié 94, dont on dispose à l'issue de l'étape 70 après la simplification de l'objet 2. L'objet 94 possède moins de sommets et de polygones que l'objet 2. Du fait de cette moindre résolution, les données représentatives de cet objet 94 présentent une taille moindre que les données 10. La transmission de l'objet 94 en est ainsi facilitée.

Dans cet exemple, la simplification est répétée plusieurs fois pour obtenir un taux de compression plus élevé. Dans ce cas, le procédé comporte en outre, à l'issue de l'étape 70, une étape additionnelle 91 de simplification. L'étape 91 est par exemple identique à l'étape 70, sauf qu'elle est exécutée sur l'objet 94 de façon à simplifier cet objet 94. Typiquement, lors de chaque nouvelle itération de l'étape 91, les critères de sélection des sommets à supprimer sont élargis pour supprimer de nouveaux sommets.

On obtient ainsi, à l'issue de l'étape 91, une version finale de l'objet 2, dite objet final 96, comme illustré à la figure 7B. L'objet 96 comporte moins de sommets et de polygones que l'objet 94. Il correspond à une version de l'objet 2 plus simplifié que ne l'est l'objet 94. Les données incrémentielles générées lors de cette exécution de l'étape 91 sont également enregistrées.

Enfin, lors d'une étape 92, l'objet 96 est transmis sur l'interface 50.

Le présent procédé est particulièrement avantageux pour réduire l'apparition d'artefacts graphiques sur les objets 94, 96 à l'issue de leur compression. En effet, les procédés de compression progressive classiquement utilisés ne tiennent pas compte des différences de texture entre polygones adjacents. Dans un tel procédé classique, les sommets B et C des polygones 12 et 14 peuvent rapidement être supprimés lors de l'opération 74. Les polygones 12 et 14 sont alors supprimés et remplacés par des nouveaux polygones. Alors, la texture des polygones est remplacée par une nouvelle texture déterminée à partir des points des morceaux de texture 28 et 29. Par exemple, il arrive fréquemment qu'un de ces nouveaux polygones soit associé à un nouveau morceau de texture défini par deux points du morceaux 29 et un point du morceau 28. Ce nouveau morceau comprend une portion de l'image 27 située entre les morceaux 28 et 29. Or cette portion est souvent complètement différente des morceaux 28 et 29. Cela fait donc apparaître à l'emplacement des polygones 12 et 14, dans l'objet simplifié, un morceau de texture très différent et donc particulièrement visible. Cela donne lieu à des artefacts graphiques particulièrement visibles du fait de la différence de texture entre les polygones 12 et 14.

Les figures 8A et 8B illustrent, respectivement, des objets 94' et 96'.

L'objet 94' est un objet simplifié obtenu à l'issue d'un procédé de compression appliqué à l'objet 2 et identique au procédé de la figure 4 (sans l'étape 91), mais dans laquelle l'étape 62 n'a pas été exécutée.

De même, l'objet 96' est un objet final obtenu après exécution du procédé de compression sur l'objet 2 au cours duquel les étapes 70 et 91 ont été appliquées, mais dans laquelle l'étape 62 n'a pas été exécutée.

L'objet 94' est identique à l'objet 94, sauf qu'il comporte un artefact graphique 100. De même, l'objet 96' est identique à l'objet 96, sauf qu'il comporte un artefact graphique 102. Ces artefacts 100 et 102 correspondent à des polygones dont l'information de texture a été perdue en partie ou en totalité lors de l'étape 70 ou 91. Cette perte d'information résulte de la suppression de polygones adjacents qui présentaient des textures différentes. Puisque ces polygones n'ont pas fait l'objet d'une séparation au cours de l'étape 62 préalablement à l'étape de simplification, ils ont été supprimés lors de l'opération 74.

A l'inverse, quand le procédé de la figure 4 est appliqué, l'information selon laquelle les polygones adjacents 12 et 14 ont des textures différents n'est pas perdue tant que tous les sommets B, B', C et C' n'ont pas été supprimés. Cette perte d'information ne peut donc se produire qu'après un nombre bien plus important d'itérations des étapes 70 et 91. Ainsi, soit les artefacts visuels n'apparaissent pas, soit ils apparaissent à un stade de compression bien plus avancé. Or, comme on le comprendra à la lecture de ce qui suit, plus l'artefact visuel apparaît à un stade avancé de la compression, plus vite il disparaît lors de la décompression. Avec le procédé de la figure 4, lors de la décompression, les artefacts sont donc supprimés ou beaucoup plus éphémères.

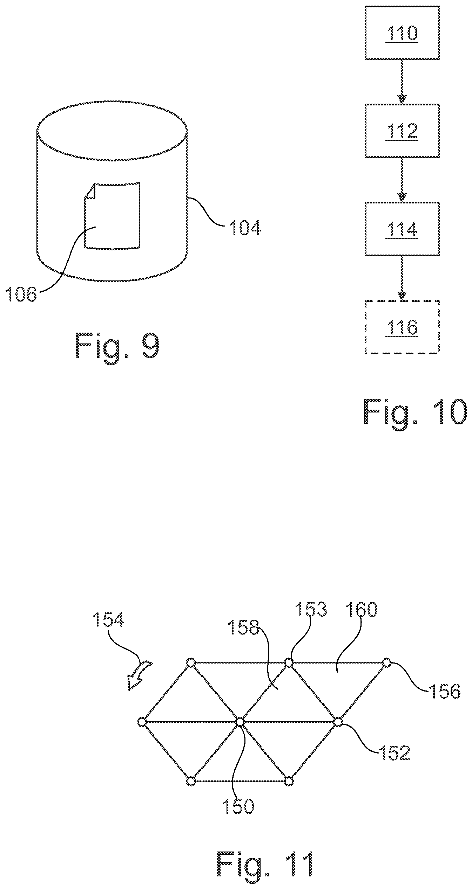

La figure 9 représente un support 104 d'informations contenant un ensemble 106 de données représentatives de l'objet 96'.

L'objet simplifié est par la suite transmis par l'émetteur 40 vers le récepteur 42, pour y être affiché. De même, les données incrémentielles respectivement associées à chaque exécution de l'étape 70 ou 91 sont elles aussi transmises depuis l'émetteur 40 vers l'émetteur 42. Cette transmission est par exemple réalisée séquentiellement.

La figure 10 illustre le procédé de décompression pour reconstruire l'objet 2. Ce procédé est par exemple celui décrit dans la demande de brevet FR2998685.

Lors d'une étape 110, les données représentatives de l'objet 96 sont acquises en premier par le récepteur 42, suite à leur transmission depuis l'émetteur 40. Le récepteur 42 affiche alors immédiatement l'objet 96 reçu.

Puis, lors d'une étape 112, le récepteur 42 reconstruit automatiquement l'objet 94 à partir de l'objet 96 et à l'aide des données incrémentielles qui ont été générées lors de l'étape 91, en effectuant des opérations inverses de celles réalisées lors de cette étape 91.

Ces données incrémentielles sont typiquement acquises par le récepteur 42 après la réception des données représentatives de l'objet 96 et, souvent, après l'affichage de l'objet 96 sur l'écran 49. Puis, à partir de ces données, le récepteur 42 modifie l'objet 96 pour rajouter les sommets du maillage qui ont été supprimés lors de l'étape 91. Cela conduit à la suppression de certains polygones du maillage de l'objet 96 pour les remplacer par des polygones de remplacement, qui sont plus nombreux et qui présentent une superficie plus réduite.

Ainsi, dans l'objet 96, le récepteur 42 :
- rajoute les sommets supprimés lors de la simplification de l'étape 91,
- remplace les arêtes du maillage qui avaient été créées lors de l'étape 91, par des arêtes supplémentaires qui relient les sommets rajoutés aux sommets existants de l'objet 96, de façon à créer les polygones supplémentaires ;
- crée des morceaux de textures supplémentaires, pour ces polygones supplémentaires, à partir des textures respectives des polygones remplacés et des données incrémentielles.

A l'issue de l'étape 112, le récepteur 42 a reconstruit l'objet 94. L'objet 94 est alors affiché à la place de l'objet 96 sur l'écran 49.

Ensuite, lors d'une étape 114, le récepteur 42 reconstruit l'objet 2 à partir de l'objet 94 reconstruit et à l'aide des données incrémentielles qui ont été générées lors de l'étape 70. Cette étape 114 est par exemple identique à l'étape 112, sauf qu'elle s'applique sur l'objet 94 plutôt que sur l'objet 96.

Ainsi, l'objet 2 est progressivement reconstruit, par raffinements successifs à partir des données incrémentielles, avec une précision croissante, au fur et à mesure de leur réception, jusqu'à retrouver un niveau de détail identique ou proche à celui qu'il présentait avant la compression. Les objets simplifiés intermédiaires, comme l'objet 94, sont affichés dès qu'ils sont reconstruits. Le récepteur 42 affiche ainsi, au fur et à mesure qu'il reçoit les données incrémentielles et qu'il met en œuvre les étapes de reconstruction, des objets dont la précision va en augmentant. Ce procédé est utile lorsque le débit de la liaison 44 est limité ou est sujet à des variations importantes. Cela évite que l'affichage de l'objet sur le récepteur 42 ne soit perturbé par un phénomène de retard (« lag » en langue anglaise). Cela limite également le temps d'attente pour que l'objet soit affiché (même dans une version simplifiée) par le récepteur 42, par rapport au cas où il faudrait attendre que tout l'objet 2 compressé soit transmis au récepteur 42 avant de pouvoir commencer la décompression puis son affichage.

Puisque, lors de la décompression, les objets simplifiés sont affichés dans l'ordre inverse de leur création par la compression, plus l'artefact visuel apparaît tardivement lors de la compression, plus vite il disparaît lors de la décompression et donc de l'affichage progressif de l'objet décompressé.

Avantageusement, lors d'une étape 116, le maillage de l'objet 2 reconstruit est mis en forme pour supprimer les sommets et arêtes créés lors de l'étape 62. Cette étape comporte ici :
- le remplacement des sommets B' et C' par, respectivement, les sommets B et C et,
- la suppression des arêtes BB', CC' et B'C.

Ainsi, les polygones 67, 69 sont supprimés et les polygones 12, 14 retrouvent la configuration qu'ils avaient initialement dans l'objet 2.

De nombreux autres modes de réalisation sont possibles.

L'objet 4 peut être différent. Il peut s'agir de n'importe quel objet apte à être représenté sous la forme d'un maillage. De même, l'atlas 6 peut être choisi différemment.

Les polygones peuvent présenter une forme autre qu'un triangle. Par exemple, les polygones ont une forme de parallélépipède.

Les données 10 peuvent être enregistrées dans un format compatible avec un autre standard graphique, tel que Direct3D.

L'émetteur 40 peut être différent. Par exemple, l'unité 46 peut être distincte de l'émetteur 40. La compression de l'objet 2 n'est donc pas réalisée par l'émetteur 40, ce dernier n'ayant alors pour rôle que de transférer les données vers le récepteur 42.

Le récepteur 42 peut être différent. Il peut par exemple s'agir d'une tablette, d'un téléphone mobile, d'un téléviseur. L'affichage de l'objet 2 peut également être réalisé indépendamment de la réception. Le terme de « récepteur » 42 englobe alors deux dispositifs distincts, l'un recevant l'objet 2 et l'autre affichant cet objet 2.

L'étape 62 peut être réalisée autrement.

En particulier, l'opération 64 peut être réalisée différemment pour identifier des polygones adjacents. Par exemple, la figure 11 illustre une autre méthode pour identifier les polygones 12, 14 dans une portion du maillage 4. Selon cette méthode, on parcourt automatiquement les arêtes du maillage en sélectionnant les sommets du maillage les uns après les autres selon un ordre prédéterminé. Pour chaque sommet 150 sélectionné, on parcourt tous les sommets immédiatement voisins 152, 153 de ce sommet 150, en tournant autour du sommet 150 selon un sens prédéfini, sens ici identifié par la flèche 154. Ces sommets voisins sont définis comme les sommets directement raccordés au sommet 150 par une arête. Pour simplifier, seuls les sommets 152 et 153 portent une référence numérique. On détermine ensuite, s'ils existent, des sommets 152 et 153 possédant un autre sommet commun immédiatement voisin 156 autres que le sommet 150. Si tel est le cas, cela indique que les sommets 152, 153 sont communs à plusieurs polygones. Dans cet exemple, on identifie des polygones adjacents 158 et 160. Le polygone 158 comporte les sommets 150, 152 et 153. Le polygone 160 comporte les sommets 152, 153 et 156. Ensuite, on vérifie si les morceaux de textures associés aux polygones 158 et 160 sont différents.

En variante, ce sont les sommets B et C du polygone 12 qui sont remplacés par les sommets B' et C'.

L'étape 91 peut être omise. Dans ce cas, l'objet 94 est l'objet final et c'est lui qui est transmis. L'étape 112 est alors omise du procédé de décompression.

Selon d'autres variantes, l'étape 91 est répétée plusieurs fois, de façon à augmenter le taux de compression de l'objet 2 avant sa transmission. Le procédé de décompression comporte alors un nombre d'étapes identiques à l'étape 112 égal au nombre de fois où l'étape 91 a été répétée.

Dans une autre variante, lorsque l'étape 91 est exécutée au moins une fois, alors l'étape 62 est répétée, par exemple avant chaque exécution de l'étape 91. Si les polygones 67 et 69 ont été supprimés lors d'une exécution de l'étape 91, ils peuvent ainsi être recréés avant d'exécuter à nouveau l'étape 91. Cela limite le risque que les polygones 12 et 14 soient supprimés lors de cette étape 91. Dans ce cas, l'étape 116 peut être répétée plusieurs fois. Par exemple, l'étape 116 est appliquée lors de la décompression après chaque étape 112 ou 114..

L'étape 70 peut être réalisée différemment. Par exemple, on utilise l'algorithme décrit dans le document suivant : Maglo, A., Courbet, C., Alliez, P.. « Progressive compression of manifold polygon meshes », Computers and Graphics, 2012, DOI : 10.1016/j.cag.2012.03.023.

L'étape 116 peut être omise. Cette étape peut aussi être appliquée après l'étape 112 pour nettoyer le maillage de l'objet 94 reconstruit, avant que ne soit appliquée l'étape 114.

Dans un autre mode de réalisation, lors de l'étape 62, les sommets B' et C', de même que les sommets B et C, font l'objet d'un marquage au cours d'une opération 180 (figure 4), indiquant ainsi qu'ils ne devront de préférence pas être supprimés lors de l'étape 70. Ce marquage consiste par exemple en une valeur prédéfinie d'un bit de données supplémentaire ajouté dans la liste 22 pour chaque sommet. Ainsi, lors de l'étape 70, on vérifie lors de l'opération 72 si le sommet présente un tel marquage. Par exemple, on réalise un premier parcours de tous les sommets du maillage. Si un sommet non marqué est rencontré et qu'il satisfait les critères pour être supprimé, alors il est supprimé. Par contre, s'il est marqué, alors on ne le supprime pas d'emblée et on indique dans une liste spécifique qui ne sera consultée que lors d'un second parcours des sommets du maillage. Si l'étape 70 peut se terminer sans qu'il ne soit nécessaire de le supprimer, alors on ne supprime pas ce sommet. S'il est impossible de ne pas supprimer ce sommet (par exemple parce que sa suppression est imposée pour préserver certaines propriétés de régularité du maillage) alors ce sommet est supprimé. Autrement dit, on retarde sa suppression jusqu'à ce qu'il ne soit pas possible de faire autrement. Le marquage peut être réinitialisé après chaque application de l'étape 70 et 91, pour tenir compte des modifications du maillage induites par la simplification. Dans un cas extrême, la suppression d'un sommet ainsi marqué est interdite, ce qui garantit qu'aucun artefact visuel n'apparaîtra.

Enfin, d'autres méthodes sont possibles pour identifier des morceaux de textures différents. Par exemple, dans une version simplifiée, des morceaux de texture sont différents dès qu'ils n'ont aucun point en commun dans l'image 27. Dans une autre variante, des morceaux de textures sont différents seulement si la distance minimale d qui sépare ces deux morceaux est strictement supérieure à un seuil prédéterminé. Ce seuil prédéterminé peut être égal à zéro ou strictement supérieur à zéro.

Il est aussi possible de comparer des caractéristiques représentatives de la texture pour décider si des morceaux de texture sont différents ou non. Par exemple, pour chaque morceau de texture, cette caractéristique est calculée puis si l'écart entre la valeur de cette caractéristique pour un premier morceau et un second morceau est supérieur à un seuil prédéterminé, alors ces morceaux de texture sont dits être différents. La caractéristique peut être la valeur médiane ou le maximum ou le minimum d'un histogramme des couleurs contenues dans le morceau. La caractéristique peut être une grandeur représentative du motif graphique figurant sur la texture, comme une dimension fractale ou un exposant de Hurst. Cette dernière façon de procéder basée sur des caractéristiques représentatives n'utilise pas les positions des points délimitant les morceaux de texture dans l'image 27.

## Revendications

1. Procédé de compression de données représentatives d'un objet tridimensionnel numérique, comportant :
- l'acquisition (60) de données (10) représentatives d'un objet tridimensionnel (2), ces données comportant :
• un maillage (4) formé d'une pluralité de polygones planaires contigus les uns par rapport aux autres, chaque polygone comportant :
∘ une pluralité de sommets (A, B, C) reliés entre eux par des arêtes qui délimitent une face du polygone, et,
∘ une texture (28) recouvrant la face du polygone ;
• un atlas de texture (6) dans lequel sont incluses toutes les textures des polygones du maillage ;
- la simplification (70) du maillage pour obtenir un maillage simplifié, en supprimant des sommets du maillage, ce qui supprime des polygones et crée à la place de nouveaux polygones présentant une face plus étendue, comportant :
• l'identification (72), en fonction d'un critère prédéterminé, de sommets à supprimer,
• la suppression (74) des sommets identifiés et des arêtes reliant ces sommets à d'autres sommets du maillage, de manière à supprimer ces polygones comportant ces sommets et ces arêtes,
• la création (76) :
∘ de nouvelles arêtes pour relier les sommets qui n'ont pas été supprimés ;
∘ de nouvelles textures, pour ces nouveaux polygones, à partir des textures respectives des polygones supprimés ;
- l'enregistrement de données incrémentielles de décompression, ces données comportant une liste de sommets et d'arêtes qui ont été supprimés du maillage lors de l'exécution de la simplification du maillage,
- la transmission (92) du maillage simplifié obtenu puis la transmission des données incrémentielles de décompression,
**caractérisé en ce que**, avant la suppression des sommets, le procédé comporte :
• l'identification (64), dans le maillage, de premier (12) et second (14) polygones adjacents qui ont des textures différentes, deux polygones étant dits adjacents s'ils présentent un premier (B) et un second (C) sommet en commun reliés entre eux par une arête commune, puis :
∘ le remplacement (66) dans le second polygone des premier et second sommets en commun par, respectivement, des troisième (B') et quatrième (C') sommets, ces troisième et quatrième sommets occupant les mêmes positions dans l'espace que, respectivement, les premier (B) et second (C) sommets ;
∘ la création (68) d'au moins deux arêtes (BB', CC', B'C) de longueur nulle entre, respectivement, les premier (B) et troisième (B') sommets et les second (C) et quatrième (C') sommets et donc au moins un polygone intermédiaire (67, 69) de surface nulle interposé entre les premier (12) et second (14, 14') polygones.

2. Procédé selon la revendication 1, dans lequel :
- le procédé comporte, avant de supprimer des sommets, le marquage (180) des premier, second, troisième et quatrième sommets ;
- lors de la simplification (70) du maillage, les premier, second, troisième et quatrième sommets qui ont fait l'objet dudit marquage ne sont pas identifiés comme étant des sommets à supprimer même s'ils satisfont au critère prédéterminé.

3. Ensemble (106) de données représentatives d'un objet tridimensionnel numérique compressé, ces données comportant :
- un maillage simplifié, formé d'une pluralité de polygones et obtenu au moyen d'un procédé de compression conforme à la revendication 1 ou 2 ;
- des données incrémentielles de décompression, ces données comportant une liste de sommets et d'arêtes qui ont été supprimés du maillage lors de l'exécution dudit procédé de compression ;
**caractérisé en ce que** l'un au moins du maillage simplifié et des données incrémentielles de décompression encode des premier, second, troisième et quatrième sommets du maillage tel que les premier et troisième sommets soient reliés entre eux par une arête de longueur nulle et les second et quatrième sommets soient reliés entre eux par une arête de longueur nulle.

4. Support (104) d'enregistrement d'informations, **caractérisé en ce qu'**il comporte l'ensemble de données représentatives d'un objet tridimensionnel numérique compressé conforme à la revendication 3.

5. Procédé de décompression de données représentatives d'un objet tridimensionnel numérique compressé, comportant :
- l'acquisition (110) d'un ensemble de données représentatives d'un objet tridimensionnel numérique compressé conforme à la revendication 3 ;
- la reconstruction (112) d'un maillage plus complexe à partir du maillage simplifié et des données incrémentielles, cette reconstruction, comportant la création :
• de sommets supplémentaires dans le maillage simplifié à partir des données incrémentielles acquises et le remplacement d'arêtes du maillage simplifié par des arêtes supplémentaires reliant ces nouveaux sommets à des sommets existants, de façon à supprimer des polygones du maillage simplifié et les remplacer par des polygones supplémentaires présentant une superficie plus réduite;
• de textures supplémentaires, pour ces polygones supplémentaires, à partir des textures respectives des polygones remplacés et données incrémentielles, **caractérisé en ce que** le maillage plus complexe reconstruit comporte les premier et troisième sommets reliés entre eux par une arête de longueur nulle et les second et quatrième sommets reliés entre eux par une arête de longueur nulle.

6. Procédé de décompression selon la revendication 5, dans lequel le maillage reconstruit est mis en forme (116) :
- en remplaçant les troisième et quatrième sommets du second polygone par, respectivement, les premier et second sommets et,
- en supprimant les arêtes de longueur nulle entre les premier et troisième sommets d'une part et les second et quatrième sommets d'autre part.

7. Procédé de transmission de données représentatives d'un objet tridimensionnel numérique entre un émetteur (40) et un récepteur (42), ce procédé comportant :
- l'acquisition de données représentatives d'un objet numérique par l'émetteur ;
- la compression des données acquises, au moyen d'un procédé de compression conforme à la revendication 1 ou 2 ;
- le transfert des données compressées, depuis l'émetteur vers le récepteur au moyen d'une liaison (44) d'échange de données ;
- la décompression, par le récepteur, des données compressées transférées, au moyen d'un procédé de décompression conforme à la revendication 5 ou 6.

8. Procédé selon l'une quelconque des revendications 1 à 2 et 5 à 7, dans lequel deux textures (28, 29) sont dites être différentes si leur intersection dans l'atlas de textures (6) est égale à l'ensemble nul.

9. Procédé selon l'une quelconque des revendications 1 à 2 et 5 à 7, dans lequel deux textures (28, 29) sont dites être différentes si la distance la plus courte d qui sépare ces deux textures dans l'atlas de texture (6) est strictement supérieure à un seuil prédéterminé.

10. Support (48) d'enregistrement d'informations, **caractérisé en ce qu'**il comporte des instructions pour l'exécution d'un procédé conforme à l'une quelconque des revendications 1 à 2 et 5 à 9 lorsque ces instructions sont exécutées par un calculateur électronique.

11. Calculateur électronique (46) pour la mise en œuvre de l'une quelconque des revendications 1 à 2 et 5 à 9, ce calculateur électronique étant programmé pour :
- acquérir (60) des données (10) représentatives d'un objet tridimensionnel (2), ces données comportant :
• un maillage (4) formé d'une pluralité de polygones planaires contigus les uns par rapport aux autres, chaque polygone comportant :
∘ une pluralité de sommets (A, B, C) reliés entre eux par des arêtes qui délimitent une face du polygone, et,
∘ une texture (28) recouvrant la face du polygone ;
• un atlas de texture (6) dans lequel sont incluses toutes les textures des polygones du maillage ;
- simplifier (70) le maillage pour obtenir un maillage simplifié, en supprimant des sommets du maillage, ce qui supprime des polygones et crée à la place de nouveaux polygones présentant une face plus étendue, en :
• identifiant (72), en fonction d'un critère prédéterminé, de sommets à supprimer,
• supprimant (74) des sommets identifiés et des arêtes reliant ces sommets à d'autres sommets du maillage, de manière à supprimer ces polygones comportant ces sommets et ces arêtes,
• créant (76) :
∘ de nouvelles arêtes pour relier les sommets qui n'ont pas été supprimés ;
∘ de nouvelles textures, pour ces nouveaux polygones, à partir des textures respectives des polygones supprimés ;
- enregistrer des données incrémentielles de décompression, ces données comportant une liste de sommets et d'arêtes qui ont été supprimés du maillage lors de la simplification du maillage,
- transmettre (92) le maillage simplifié obtenu puis transmettre les données incrémentielles de décompression,
**caractérisé en ce que** le calculateur est programmé pour, avant de supprimer (74) des sommets, :
• identifier (64), dans le maillage, des premier (12) et second (14) polygones adjacents qui ont des textures différentes, deux polygones étant dits adjacents s'ils présentent un premier (B) et un second (C) sommet en commun reliés entre eux par une arête commune, puis :
• remplacer (66) dans le second polygone des premier et second sommets en commun par, respectivement, des troisième (B') et quatrième (C') sommets, ces troisième et quatrième sommets occupant les mêmes positions dans l'espace que, respectivement, les premier (B) et second (C) sommets ;
• créer (68) au moins deux arêtes (BB', CC', B'C) de longueur nulle entre, respectivement, les premier (B) et troisième (B') sommets et les second (C) et quatrième (C') sommets et donc créer au moins un polygone intermédiaire (67, 69) de surface nulle interposé entre les premier (12) et second (14, 14') polygones.

## Patentansprüche

1. Verfahren zur Komprimierung von Daten, die für ein digitales dreidimensionales Objekt repräsentativ sind, umfassend:
- das Erfassen (60) von Daten (10), die für ein dreidimensionales Objekt (2) repräsentativ sind, wobei diese Daten umfassen:
• ein Gitter (4), das aus einer Mehrzahl von aneinander angrenzenden planaren Polygonen gebildet wird, wobei jedes Polygon umfasst:
o eine Mehrzahl von Eckpunkten (A, B, C), die untereinander durch Kanten verbunden sind, die eine Fläche des Polygons begrenzen, und
o eine Textur (28), die die Fläche des Polygons bedeckt;
• einen Texturatlas (6), in dem alle Texturen der Polygone des Gitters enthalten sind;
- das Vereinfachen (70) des Gitters, um ein vereinfachtes Gitter zu erhalten, indem Eckpunkte des Gitters gelöscht werden, wodurch Polygone gelöscht werden und an der Stelle neue Polygone erzeugt werden, die eine größere Fläche aufweisen, umfassend:
• das Ermitteln (72), in Abhängigkeit von einem vorbestimmten Kriterium, von zu löschenden Eckpunkten,
• das Löschen (74) der ermittelten Eckpunkte und der Kanten, die diese Eckpunkte mit anderen Eckpunkten des Gitters verbinden, so dass diese Polygone, die diese Eckpunkte und diese Kanten umfassen, gelöscht werden,
• das Erzeugen (76):
o von neuen Kanten, um die Eckpunkte, die nicht gelöscht wurden, zu verbinden;
o von neuen Texturen für diese neuen Polygone anhand der jeweiligen Texturen der gelöschten Polygone;
- das Speichern von inkrementellen Dekomprimierungsdaten, wobei diese Daten eine Liste mit Eckpunkten und Kanten umfassen, die bei der Ausführung der Vereinfachung des Gitters aus dem Gitter gelöscht worden sind,
- das Übertragen (92) des erhaltenen vereinfachten Gitters, dann das Übertragen der inkrementellen Dekomprimierungsdaten, **dadurch gekennzeichnet, dass** das Verfahren, vor dem Löschen der Eckpunkte, umfasst:
» das Ermitteln (64), in dem Gitter, von ersten (12) und zweiten (14) benachbarten Polygonen, die unterschiedliche Texturen haben, wobei zwei Polygone als benachbart bezeichnet werden, wenn sie einen ersten (B) und einen zweiten (C) Eckpunkt, die untereinander durch eine gemeinsame Kante verbunden sind, gemein haben, dann:
∘ das Ersetzen (66), in dem zweiten Polygon, der ersten und zweiten gemeinsamen Eckpunkte durch dritte (B') beziehungsweise vierte (C') Eckpunkte, wobei diese dritten und vierten Eckpunkte die gleichen Positionen im Raum wie die ersten (B) beziehungsweise zweiten (C) Eckpunkte einnehmen;
o das Erzeugen (68) von mindestens zwei Kanten (BB', CC', B'C) mit der Länge null zwischen den ersten (B) und dritten (B') Eckpunkten beziehungsweise den zweiten (C) und vierten (C') Eckpunkten und demzufolge von mindestens einem Zwischenpolygon (67, 69) mit dem Flächeninhalt null, das zwischen den ersten (12) und zweiten (14, 14') Polygonen angeordnet ist.

2. Verfahren nach Anspruch 1, bei dem:
- das Verfahren, vor dem Löschen der Eckpunkte, das Markieren (180) der ersten, zweiten, dritten und vierten Eckpunkte umfasst;
- beim Vereinfachen (70) des Gitters die ersten, zweiten, dritten und vierten Eckpunkte, die markiert worden sind, nicht als zu löschende Eckpunkte ermittelt werden, selbst wenn sie das vorbestimmte Kriterium erfüllen.

3. Satz (106) von Daten, die für ein komprimiertes digitales dreidimensionales Objekt repräsentativ sind, wobei diese Daten umfassen:
- ein vereinfachtes Gitter, das aus einer Mehrzahl von Polygonen gebildet wird und mittels eines Komprimierungsverfahrens nach Anspruch 1 oder 2 erhalten wird;
- inkrementelle Dekomprimierungsdaten, wobei diese Daten eine Liste mit Eckpunkten und Kanten umfassen, die bei der Ausführung des Komprimierungsverfahrens aus dem Gitter gelöscht worden sind;
**dadurch gekennzeichnet, dass** mindestens eines unter dem vereinfachten Gitter und den inkrementellen Dekomprimierungsdaten erste, zweite, dritte und vierte Eckpunkte des Gitters so kodiert, dass die ersten und dritten Eckpunkte untereinander durch eine Kante mit der Länge null verbunden sind und die zweiten und vierten Eckpunkte untereinander durch eine Kante mit der Länge null verbunden sind.

4. Medium (104) zum Speichern von Informationen, **dadurch gekennzeichnet, dass** es den Satz von Daten, die für ein komprimiertes digitales dreidimensionales Objekt repräsentativ sind, nach Anspruch 3 umfasst.

5. Verfahren zur Dekomprimierung von Daten, die für ein komprimiertes digitales dreidimensionales Objekt repräsentativ sind, umfassend:
- das Erfassen (110) eines Satzes von Daten, die für ein komprimiertes digitales dreidimensionales Objekt repräsentativ sind, nach Anspruch 3;
- das Rekonstruieren (112) eines komplexeren Gitters anhand des vereinfachten Gitters und der inkrementellen Daten, wobei dieses Rekonstruieren das Erzeugen umfasst:
• von zusätzlichen Eckpunkten in dem vereinfachten Gitter anhand der erfassten inkrementellen Daten und das Ersetzen von Kanten des vereinfachten Gitters durch zusätzliche Kanten, die diese neuen Eckpunkte mit bestehenden Eckpunkten verbinden, so dass Polygone des vereinfachten Gitters gelöscht werden und durch zusätzliche Polygone ersetzt werden, die einen kleineren Flächeninhalt aufweisen;
• von zusätzlichen Texturen für diese zusätzlichen Polygone anhand der jeweiligen Texturen der ersetzten Polygone und der inkrementellen Daten,
**dadurch gekennzeichnet, dass** das rekonstruierte komplexere Gitter die ersten und zweiten Eckpunkte, die untereinander durch eine Kante mit der Länge null verbunden sind, und die zweiten und vierten Eckpunkte, die untereinander durch eine Kante mit der Länge null verbunden sind, umfasst.

6. Dekomprimierungsverfahren nach Anspruch 5, bei dem das rekonstruierte Gitter in Form gebracht wird (116):
- indem die dritten und vierten Eckpunkte des zweiten Polygons durch die ersten beziehungsweise zweiten Eckpunkte ersetzt werden und
- indem die Kanten mit der Länge null zwischen den ersten und dritten Eckpunkten zum einen und den zweiten und vierten Eckpunkten zum anderen gelöscht werden.

7. Verfahren zur Übertragung von Daten, die für ein digitales dreidimensionales Objekt repräsentativ sind, zwischen einem Sender (40) und einem Empfänger (42), wobei dieses Verfahren umfasst:
- das Erfassen von Daten, die für ein digitales Objekt repräsentativ sind, durch den Sender;
- das Komprimieren der erfassten Daten mittels eines Komprimierungsverfahrens nach Anspruch 1 oder 2;
- das Transferieren der komprimierten Daten von dem Sender zu dem Empfänger über eine Datenaustauschverbindung (44);
- das Dekomprimieren, durch den Empfänger, der transferierten komprimierten Daten mittels eines Dekomprimierungsverfahrens nach Anspruch 5 oder 6.

8. Verfahren nach einem der Ansprüche 1 bis 2 und 5 bis 7, bei dem zwei Texturen (28, 29) als unterschiedlich bezeichnet werden, wenn ihre Schnittmenge im Texturatlas (6) gleich der Nullmenge ist.

9. Verfahren nach einem der Ansprüche 1 bis 2 und 5 bis 7, bei dem zwei Texturen (28, 29) als unterschiedlich bezeichnet werden, wenn der kürzeste Abstand d, der diese beiden Texturen im Texturatlas (6) trennt, strikt größer als ein vorbestimmter Schwellenwert ist.

10. Medium (48) zum Speichern von Informationen, **dadurch gekennzeichnet, dass** es Befehle umfasst, die bei der Ausführung dieser Befehle durch einen elektronischen Rechner ein Verfahren nach einem der Ansprüche 1 bis 2 und 5 bis 9 ausführen.

11. Elektronischer Rechner (46) zur Umsetzung eines der Ansprüche 1 bis 2 und 5 bis 9, wobei dieser elektronische Rechner dazu programmiert ist:
- Daten (10) zu erfassen (60), die für ein dreidimensionales Objekt (2) repräsentativ sind, wobei diese Daten umfassen:
• ein Gitter (4), das aus einer Mehrzahl von aneinander angrenzenden planaren Polygonen gebildet wird, wobei jedes Polygon umfasst:
o eine Mehrzahl von Eckpunkten (A, B, C), die untereinander durch Kanten verbunden sind, die eine Fläche des Polygons begrenzen, und
o eine Textur (28), die die Fläche des Polygons bedeckt;
• einen Texturatlas (6), in dem alle Texturen der Polygone des Gitters enthalten sind;
- das Gitter zu vereinfachen (70), um ein vereinfachtes Gitter zu erhalten, indem Eckpunkte des Gitters gelöscht werden, wodurch Polygone gelöscht werden und an der Stelle neue Polygone erzeugt werden, die eine größere Fläche aufweisen, indem:
• in Abhängigkeit von einem vorbestimmten Kriterium zu löschende Eckpunkte ermittelt (72) werden,
• ermittelte Eckpunkte und Kanten, die diese Eckpunkte mit anderen Eckpunkten des Gitters verbinden, gelöscht (74) werden, so dass diese Polygone, die diese Eckpunkte und diese Kanten umfassen, gelöscht werden,
• erzeugt (76) werden:
o neue Kanten, um die Eckpunkte, die nicht gelöscht worden sind, zu verbinden;
∘ neue Texturen für diese neuen Polygone anhand der jeweiligen Texturen der gelöschten Polygone;
- inkrementelle Dekomprimierungsdaten zu speichern, wobei diese Daten eine Liste mit Eckpunkten und Kanten umfassen, die bei der Vereinfachung des Gitters aus dem Gitter gelöscht worden sind,
- das erhaltene vereinfachte Gitter zu übertragen (92), dann die inkrementellen Dekomprimierungsdaten zu übertragen,
**dadurch gekennzeichnet, dass** der Rechner dazu programmiert ist, bevor Eckpunkte gelöscht (74) werden:
• in dem Gitter erste (12) und zweite (14) benachbarte Polygone zu ermitteln (64), die unterschiedliche Texturen haben, wobei zwei Polygone als benachbart bezeichnet werden, wenn sie einen ersten (B) und einen zweiten (C) Eckpunkt, die untereinander durch eine gemeinsame Kante verbunden sind, gemein haben, dann:
• in dem zweiten Polygon erste und zweite gemeinsame Eckpunkte durch dritte (B') beziehungsweise vierte (C') Eckpunkte zu ersetzen (66), wobei diese dritten und vierten Eckpunkte die gleichen Positionen im Raum wie die ersten (B) beziehungsweise zweiten (C) Eckpunkte einnehmen;
• mindestens zwei Kanten (BB', CC', B'C) mit der Länge null zwischen den ersten (B) und dritten (B') Eckpunkten beziehungsweise den zweiten (C) und vierten (C') Eckpunkten zu erzeugen (68) und demzufolge mindestens ein Zwischenpolygon (67, 69) mit dem Flächeninhalt null zu erzeugen, das zwischen den ersten (12) und zweiten (14, 14') Polygonen angeordnet ist.

## Claims

1. Method for compressing data representative of a three-dimensional digital object, involving:
- the acquisition (60) of data (10) representative of a three-dimensional object (2), these data comprising:
• a mesh (4) formed by a plurality of planar polygons contiguous with each other, each polygon comprising:
o a plurality of vertices (A, B, C) joined together by edges delimiting a face of the polygon, and,
∘ a texture (28) covering the face of the polygon;
• a texture atlas (6) which includes all the textures of the polygons of the mesh;
- the simplification (70) of the mesh to obtain a simplified mesh by deleting vertices of the mesh, which deletes polygons and creates in their place new polygons having a broader face, involving:
• the identification (72), as a function of a predetermined criterion, vertices to be deleted,
• the deletion (74) of the vertices identified and of the edges joining these vertices to other vertices of the mesh so as to delete these polygons comprising these vertices and these edges,
• the creation (76):
∘ of new edges to join the vertices which have not been deleted;
∘ of new textures for these new polygons from the respective textures of the deleted polygons;
- the recording of incremental decompression data, these data comprising a list of vertices and edges which have been deleted from the mesh during the execution of the mesh simplification,
- the transmission (92) of the simplified mesh obtained and then the transmission of the incremental decompression data,
**characterized in that**, before deleting the vertices, the method involves:
• the identification (64), in the mesh, of first (12) and second (14) adjacent polygons having different textures, two polygons being said to be adjacent if they have a first (B) and a second (C) shared vertex joined together by a shared edge, then:
o the replacement (66) in the second polygon of the first and second shared vertices by, respectively, third (B') and fourth (C') vertices, these third and fourth vertices occupying the same positions in space as, respectively, the first (B) and second (C) vertices;
∘ the creation (68) of at least two edges (BB', CC', B'C) of zero length between, respectively, the first (B) and third (B') vertices and the second (C) and fourth (C') vertices and thus at least one intermediate polygon (67, 69) of zero surface interposed between the first (12) and second (14, 14') polygons.

2. Method according to Claim 1, wherein:
- the method involves, prior to the deletion of the vertices, the marking (180) of the first, second, third and fourth vertices;
- during the simplification (70) of the mesh, the first, second, third and fourth vertices which have undergone said marking are not identified as being vertices to be deleted even if they meet the predetermined criterion.

3. Set (106) of data representative of a compressed three-dimensional digital object, these data comprising:
- a simplified mesh, formed from a plurality of polygons and obtained by means of a compression method according to Claim 1 or 2;
- incremental decompression data, these data comprising a list of vertices and edges which have been deleted from the mesh during the execution of said compression method;
**characterized in that** at least one of the simplified mesh and the incremental decompression data encodes the first, second, third and fourth vertices of the mesh such that the first and third vertices are joined together by an edge of zero length and the second and fourth vertices are joined together by an edge of zero length.

4. Information recording medium (104), **characterized in that** it contains the set of data representative of a three-dimensional digital object compressed according to Claim 3.

5. Method for decompressing data representative of a compressed three-dimensional digital object, involving:
- the acquisition (110) of a set of data representative of a three-dimensional digital object compressed according to Claim 3;
- the reconstruction (112) of a more complex mesh from the simplified mesh and the incremental data, this reconstruction involving the creation:
∘ of supplemental vertices in the simplified mesh from the incremental data acquired and the replacement of edges of the simplified mesh with supplemental edges by joining these new vertices to existing vertices in order to delete polygons from the simplified mesh and replace them with supplemental polygons having a more reduced surface;
o of supplemental textures, for these supplemental polygons, from the respective textures of the polygons replaced and incremental data,
**characterized in that** the more complex mesh so reconstructed contains the first and third vertices joined together by an edge of zero length and the second and fourth vertices joined together by an edge of zero length.

6. Decompression method according to Claim 5, wherein the reconstructed mesh is formatted (116):
- by replacing the third and fourth vertices of the second polygon with the first and second vertices, respectively, and
- by deleting the edges of zero length between the first and third vertices on the one hand and the second and fourth vertices on the other hand.

7. Method for transmitting data representative of a three-dimensional digital object between a transmitter (40) and a receiver (42), this method involving:
- the acquisition of data representative of a digital object by the transmitter;
- the compression of the data so acquired, by means of a compression method according to Claim 1 or 2;
- the transfer of the compressed data from the transmitter to the receiver by means of a data exchange link (44);
- the decompression, by the receiver, of the compressed data so transferred, by means of a decompression method according to Claim 5 or 6.

8. Method according to any one of Claims 1 and 2 and 5 to 7, wherein two textures (28, 29) are said to be different if their intersection in the texture atlas (6) is equal to the zero set.

9. Method according to any one of Claims 1 and 2 and 5 to 7, wherein two textures (28, 29) are said to be different if the shortest distance d separating these two textures in the texture atlas (6) is strictly greater than a predetermined threshold.

10. Information recording medium (48), **characterized in that** it comprises instructions for executing a method according to any one of Claims 1 and 2 and 5 to 9 when these instructions are executed by an electronic computer.

11. Electronic computer (46) for carrying out any one of Claims 1 and 2 and 5 to 9, this electronic computer being programmed to:
- acquire (60) data (10) representative of a three-dimensional object (2), these data comprising:
• a mesh (4) formed by a plurality of planar polygons contiguous with each other, each polygon comprising:
∘ a plurality of vertices (A, B, C) joined together by edges delimiting a face of the polygon, and,
∘ a texture (28) covering the face of the polygon;
• a texture atlas (6) which includes all the textures of the polygons of the mesh;
- simplify (70) the mesh to obtain a simplified mesh by deleting vertices of the mesh, which deletes polygons and creates in their place new polygons having a broader face, by:
• identifying (72), as a function of a predetermined criterion, vertices to be deleted,
• deleting (74) of the vertices identified and of the edges joining these vertices to other vertices of the mesh so as to delete these polygons comprising these vertices and these edges,
• creating (76):
o new edges to join the vertices which have not been deleted;
∘ new textures for these new polygons from the respective textures of the deleted polygons;
- record incremental decompression data, these data comprising a list of vertices and edges which have been deleted from the mesh during the execution of the mesh simplification,
- transmit (92) the simplified mesh obtained and then transmit the incremental decompression data,
**characterized in that**, before deleting (74) the vertices, the computer is programmed to:
• identify (64), in the mesh, first (12) and second (14) adjacent polygons having different textures, two polygons being said to be adjacent if they have a first (B) and a second (C) shared vertex joined together by a shared edge, then:
• replace (66) in the second polygon the first and second shared vertices with, respectively, the third (B') and fourth (C') vertices, these third and fourth vertices occupying the same positions in space as, respectively, the first (B) and second (C) vertices;
• create (68) at least two edges (BB', CC', B'C) of zero length between, respectively, the first (B) and third (B') vertices and the second (C) and fourth (C') vertices and thus create at least one intermediate polygon (67, 69) of zero surface interposed between the first (12) and second (14, 14') polygons.
